# EUROPEAN PATENT SPECIFICATION

(11) **EP 1 610 042 B1**
(45) Date of publication and mention of the grant of the patent: **23.04.2008**
(21) Application number: 05012074.0
(22) Date of filing: 04.06.2005
(51) Int. Cl.: F16J 15/12

(54) **Elastomer coated screen gasket**
Elastomerbeschichtete Flachdichtung
Joint plat recouvert d'élastomère

(30) Priority: 22.06.2004 US 873845
(43) Date of publication of application: 28.12.2005
(73) Proprietor: Carl Freudenberg KG, 69469 Weinheim (DE)
(72) Inventor: Richards, Jeffrey Lane, Holly, MI 48442 (US)

(56) References cited:
- US-A- 3 158 526
- US-A- 3 794 333
- US-A- 4 955 621

## Description

### FIELD OF THE INVENTION

The present invention relates to gaskets, and more particularly, to an elastomer coated screen gasket.

### BACKGROUND OF THE INVENTION

Gaskets have been used for many years for providing a sealed connection between two relatively static members. Gaskets typically require a compressive load between the members being sealed in order for the gasket to provide an effective seal (see e.g. US.A.4 955 621). For example, a gasket placed between two stationary members, such as an engine block and an oil pan or an engine cylinder head and a valve/cam cover, is compressed between these elements.

One gasket design has a solid metal core which may or may not be coated or partially coated with a polymeric material. The use of a solid metal core increases the cost of the gasket and requires a greater thickness due to the stamping operation used to manufacture the metal core. Furthermore, any desired change in shape of the gasket requires new stamping plates, making minor design changes cost prohibitive. In addition, the polymeric material coating the gasket may be hard to process requiring longer manufacturing times and further increasing the cost of the gasket.

Accordingly, a need exists for a gasket having reduced cost and greater design flexibility.

### SUMMARY OF THE INVENTION

The present invention provides a gasket including a wire screen. An elastomeric material coats the wire screen. The use of a wire screen reduces the cost of the gasket while improving durability and design flexibility.

Further areas of applicability of the present invention will become apparent from the detailed description provided hereinafter. It should be understood that the detailed description and specific examples, while indicating the preferred embodiment of the invention, are intended for purposes of illustration only and are not intended to limit the scope of the invention.

### BRIEF DESCRIPTION OF THE DRAWINGS

The present invention will become more fully understood from the detailed description and the accompanying drawings, wherein:

Figure 1 is a perspective view of an elastomer coated screen gasket according to the principles of the present invention;

Figure 2 is a schematic view of a wire screen used in the gasket of the present invention;

Figure 3 is a cross sectional view taken along line 3-3 of Figure 1; and

Figure 4 is a magnified view of detail 3 in Figure 3.

### DETAILED DESCRIPTION OF THE PREFERRED EMBODIMENTS

The following description of the preferred embodiments is merely exemplary in nature and is in no way intended to limit the invention, its application, or uses.

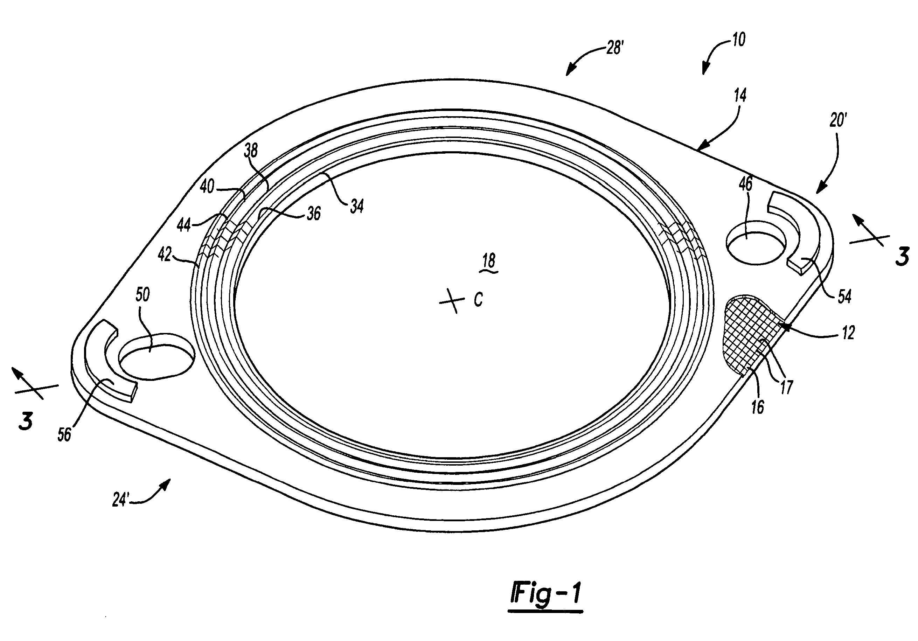

Referring now to Figure 1, a gasket 10 according to the principles of the present invention is shown. It will be understood that the shape and dimensions of the gasket 10 enclosed herein are for illustrative purposes only and do not limit the scope of the present application. The gasket 10 includes a screen 12 embedded in an elastomeric material 14.

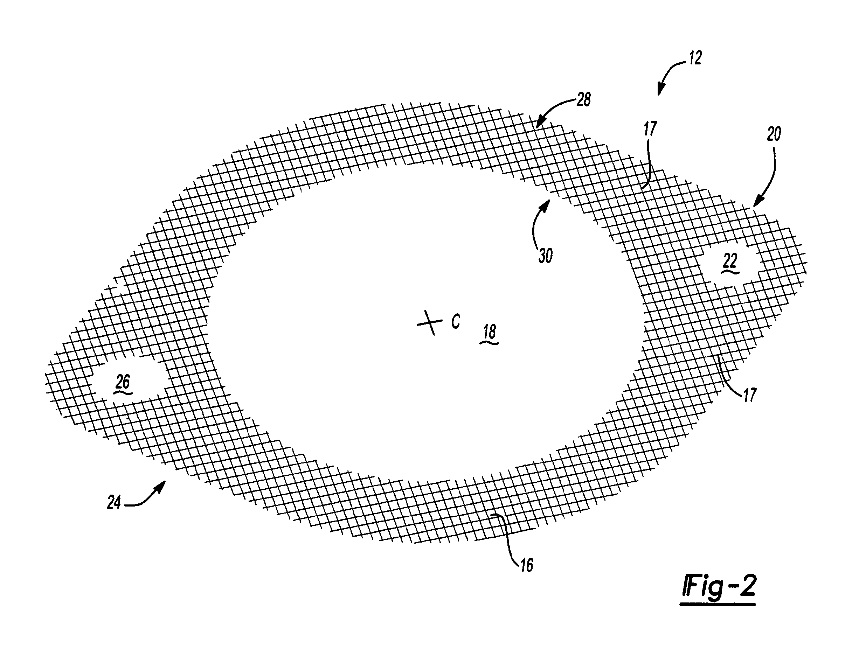

The screen 12 (as illustrated in Figure 2) includes several openings 16 between the cross weaved wires 17 which facilitate the flow of the elastomeric material 14 therethrough while the gasket 10 is being molded. The screen 12 may be comprised of aluminum, copper, steel, carbon fiber, perforated sheeting, such as MYLAR, or any other suitable material and may be pre-cut into a desired shape prior to the introduction of the elastomeric material 14 or may be in sheet form and cut later. The screen 12 has a thickness T which according to a first embodiment may be approximately 0.2 millimeters (mm) to 0.3 millimeters (mm). The thickness T is generally uniform. A central aperture 18 may be formed along a centerline C prior to the introduction of the elastomeric material 14.

With reference now to Figure 2, a first end 20 of the screen 12 may further include a first aperture 22 for receipt of a first coupling mechanism (not shown), such as, for example, a bolt or screw, therethrough. The screen 12 has a second end 24 which may include a second aperture 26 for receipt of a second coupling mechanism (not shown). The screen 12 has a top side 28 and a bottom side 30 which is coated with the elastomeric material 14.

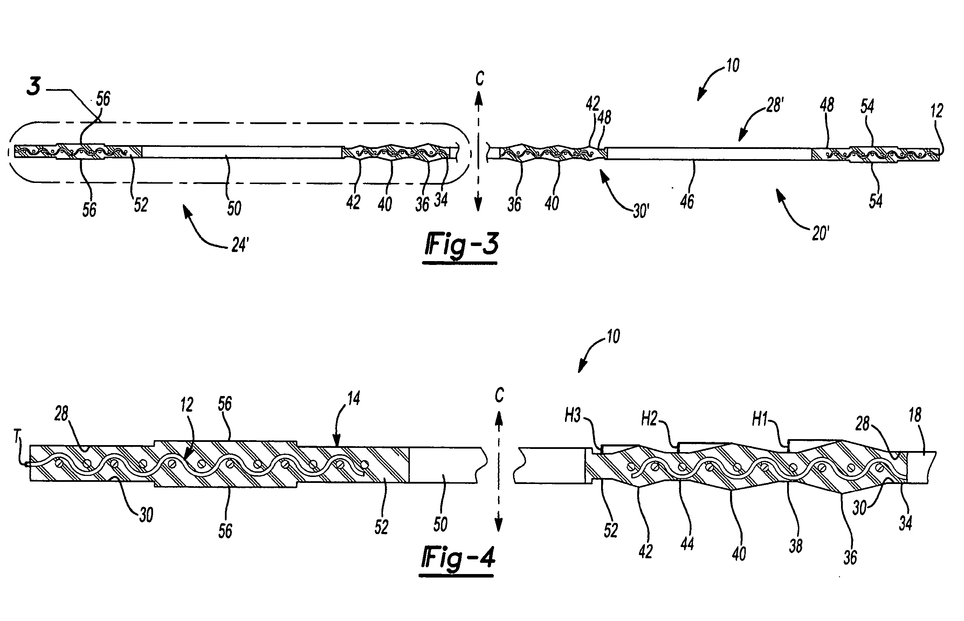

With continuing reference to Figure 2 and additional reference to Figures 1, 3 and 4, the elastomeric material 14 may coat the top side 28 and bottom side 30 of the screen 12 such that the screen 12 is completely embedded by the elastomeric material 14, forming the gasket top side 28' and the gasket bottom side 30', each having a first end 20' and a second end 24'. The central aperture 18 of the screen 12 may be coated or remain uncoated by the elastomeric material 14.

Both the top side 28' and the bottom side 30' may include a plurality of sealing ribs 36, 40, 42. The plurality of sealing ribs 36, 40, 42 may be formed from elastomeric material 14 and may surround the central aperture 18 of the screen 12. More specifically, an area 34 having a first predetermined thickness may be formed directly adjacent to the central aperture 18. The area 34 is adjacent a first sealing rib 36. The first sealing rib 36 is adjacent a valley 38. The valley 38 is further adjacent to a second sealing rib 40. The second sealing rib 40 is separated from a third sealing rib 42 by a second valley 44. The first sealing rib 36 has a height H1 which is generally greater than a height H2 of the second sealing rib 40. The third sealing rib 42 also has a height H3 which is generally smaller than the height H2 of the second sealing rib 40. The valleys 38 and 44 are configured such that when a downward force F is applied to the first, second and third sealing ribs 36, 40 and 42, the first, second and third sealing ribs 36, 40 and 42 can deform into the valleys 38 and 44. The first, second and third sealing ribs 36, 40, 42 ensure a tight seal.

The first end 20' of gasket 10 may include a first mounting aperture 46 which corresponds to the first aperture 22 of the screen 12 for receipt of the first coupling mechanism therethrough. The first mounting aperture 46 may be configured to extend beyond the first aperture 22 of the screen 12 to provide a first elastomeric buffer region 48. Similarly, the second end 24' of gasket 10 may include a second mounting aperture 50 corresponding to the second aperture 26 of the screen 12 for receipt of the second coupling mechanism therethrough. The second mounting aperture 50 may also extend beyond the second aperture 26 of the screen 12 to form a second elastomeric buffer region 52. The first and second elastomeric buffer regions 48, 52 ensure a tight seal against the first and second coupling mechanism. It should be understood that the screen 12 may be completely coated with the elastomeric material prior to a cutting process during which the apertures in the screen are formed.

A first raised portion or shelf 54 may be formed adjacent to the first mounting aperture 46 on both the top side 28' and bottom side 30' of gasket 10. A second raised portion or shelf 56 may also be formed on both the top side 28' and bottom side 30' adjacent to the second mounting aperture 50. The first raised portion 54 and second raised portion 56 provide a support to prevent the flexing of a part (not shown) which mates with the gasket 10 and thus further ensures a tight seal.

The elastomeric material 14 may comprise nitrile rubber (NBR) with a low acrylonitrile (ACN) content, medium ACN content NBR, high ACN content NBR, butyl-chlorobutyl, chloroprene, chlorosulfonated polyethylene, ethylene propylene, epichlorohydrin, ethylene vinyl acetate, floursilicone, fluorocarbon, hydrogenated NBR, polyisoprene, polyuacrylate, propylene oxide, polybutadiene, polysulfide, modified NBR, silicone, styrene butadiene rubber (SBR) or any enhanced performance polymer or thermoplastic elastomer.

To form the gasket 10 of the present invention, the screen 12 is placed into a mold cavity (not shown). The screen 12 may be of a predetermined shape or may be in sheet form. Next, the elastomeric material 14 is injected into the mold cavity. The elastomeric material 14 then flows through the openings 16 in the screen 12 to substantially coat the top and bottom of the screen 12, forming the top side 28' and the bottom side 30' of the gasket 10. In this embodiment, the mold cavity is such that the elastomeric material 14 flows around the central aperture 18, however, it is envisioned that the central aperture 18 could be created in a later processing step. Likewise, the mold cavity may also be configured to enable the elastomeric material 14 to flow and create the first and second mounting apertures 46, 50 or the first and second mounting apertures 46, 50 may be created in a later processing step. In addition, the mold cavity may be configured to allow excess elastomeric material 14 to form the first, second and third sealing ribs 36, 40, 42. In addition, the mold cavity could be designed such that excess elastomeric material 14 may form the first raised portion 54 and the second raised portion 56 adjacent the first and second mounting apertures 46, 50.

The gasket 10 of the present invention reduces the weight and cost of current gaskets through the use of a screen 12. The screen 12 provides the gasket 10 with a compression limiting feature while enabling the gasket 10 to have a reduced thickness. The screen 12 also enables the shape of the gasket 10 to be easily modified to suit any desired design change. The use of the screen 12 also reduces the amount of torque required to create a sufficient seal. In addition, the elastomeric material 14 coating the screen 12 is generally more durable, resistant and easier to process than current elastomeric materials used in gaskets.

## Claims

1. A gasket (10) comprising a wire screen ('12); an elastomeric material (14) embedding the wire screen (12), wherein the gasket (10) includes a first face (28') and a second face (30') and a plurality of molded sealing ribs (36, 40, 42) beining formed in a least one of said first (28') and second (30') faces wherein, a first sealing rib (36) adjacent to and surrounding an opening (18) of the gasket (10) **characterized by** a second sealing rib (40) adjacent the first sealing rib (36) and a third sealing rib (42) adjacent to the second sealing rib (40), said first sealing rib (36) is greater in height than the second sealing rib (40) and the second sealing rib (40) is greater in height than the third sealing rib (42).

2. The gasket of claim 1 wherein the gasket further comprises at least one mounting aperture (46, 50) located between the opening (18) and an edge (20', 24') of said gasket (10).

3. The gasket of claim 2 wherein the gasket (10) further comprises at least one molded shelf (54, 56) adjacent to the mounting aperture (46, 50).

4. The gasket of claim 1 wherein the elastomeric material (14) is a thermoplastic elastomer.

5. The gasket of claim 1 wherein the elastomeric material (14) is selected from the group consisting of: nitrile rubber (NBR) with a low acrylonitrile (ACN) content, medium ACN content NBR, high ACN content NBR, butylchlorobutyl, chloroprene, chlorosulfonated polyethylene, ethylene propylene, epichlorohydrin, ethylene vinyl acetate, floursilicone, fluorocarbon, hydrogenated NBR, polyisoprene, polyuacrylate, propylene oxide, polybutadiene, polysulfide, modified NBR, silicone, and styrene butadiene rubber (SBR).

## Patentansprüche

1. Dichtung (10), umfassend ein Drahtgitter (12), ein elastomeres Material (14) in welches das Drahtgitter (12) eingebettet ist, wobei die Dichtung (10) eine erste Seite (28') und eine zweite Seite (30') sowie eine Vielzahl von zumindest in einer der ersten Seite (28) oder der zweiten Seite (30) angeformte Dichtrippen (36, 40,42) aufweist, wobei eine erste Dichtrippe (36) benachbart zu einer Öffnung (18) der Dichtung (10) angeordnet ist und diese umgibt, **dadurch gekennzeichnet, dass** eine zweite Dichtrippe (40) benachbart zu der ersten Dichtrippe (36) angeordnet ist und eine dritte Dichtrippe (42) benachbart zu der zweiten Dichtrippe (40) angeordnet ist, wobei die erste Dichtrippe (36) höher ist als die zweite Dichtrippe (40) und die zweite Dichtrippe höher ist als die dritte Dichtrippe (42).

2. Dichtung nach Anspruch 1, **dadurch gekennzeichnet, dass** die Dichtung (10) zumindest eine Montageöffnung (46, 50) aufweist, welche zwischen der Öffnung (18) und einer Ecke (20' ,24') der Dichtung (10) angeordnet ist.

3. Dichtung nach Anspruch 2, **dadurch gekennzeichnet, dass** die Dichtung (10) zumindest einen angeformten Absatz (54, 46) benachbart zu der Montageöffnung (46, 50) aufweist.

4. Dichtung nach Anspruch 1, **dadurch gekennzeichnet, dass** das elastomere Material (14) ein thermoplastisches Elastomer ist.

5. Dichtung nach Anspruch 1, **dadurch gekennzeichnet, dass** das elastomere Material (14) ausgewählt ist aus der Gruppe beinhaltend: Nitrilkautschuk (NBR) mit einem geringen Acrylnitril (ACN) Bestandteil, NBR mit einem mittleren ACN Bestandteil, NBR in einem hohen ACN Bestandteil, Butylchlorbutyl, Chloropren, chlorsulfoniertes Polyethylen, Ethylenpropylen, Epichlorhydrin, Ethylenvinylacetat, Fluorsilikon, Fluorcarbon, hydriertes NBR, Polyisopren, Polyacrylat, Propylenoxid, Polybutadien, Polysulfid, modifiziertes NBR, Silikon und Styrenbutadienkautschuk (SBR).

## Revendications

1. Joint (10) comprenant un treillis (12) en fil métallique ; un matériau élastomère (14) enrobant le treillis (12) en fil métallique, le joint (10) comprenant une première face (28') et une deuxième face (30') et une pluralité de nervures (36, 40, 42) d'étanchéité moulées formées dans au moins une desdites première (28') et deuxième faces (30'), une première nervure (36) d'étanchéité adjacente à et entourant une ouverture (18) du joint (10) ; **caractérisé par** une deuxième nervure (40) d'étanchéité adjacente à la première nervure (36) d'étanchéité, et une troisième nervure (42) d'étanchéité adjacente à la deuxième nervure (40) d'étanchéité, ladite première nervure (36) d'étanchéité présentant une hauteur supérieure à celle de la deuxième nervure (40) d'étanchéité et la deuxième nervure (40) d'étanchéité présentant une hauteur supérieure à celle de la troisième nervure (42) d'étanchéité.

2. Joint selon la revendication 1, le joint comportant en outre au moins un orifice (46, 50) de montage situé entre l'ouverture (18) et un bord (20', 24') dudit joint (10).

3. Joint selon la revendication 2, le joint (10) comportant en outre au moins une plage moulée (54, 56) adjacente à l'orifice (46, 50) de montage.

4. Joint selon la revendication 1, le matériau élastomère (14) étant un élastomère thermoplastique.

5. Joint selon la revendication 1, le matériau élastomère (14) étant choisi dans le groupe formé des : caoutchouc nitrile (NBR) à faible teneur en acrylonitrile (ACN), NBR à teneur moyenne en ACN, NBR à forte teneur en ACN, butyle-chlorobutyle, chloroprène, polyéthylène chlorosulfoné, éthylène-propylène, épichlorhydrine, éthylène acétate de vinyle, fluorosilicone, fluorocarbone, NBR hydrogéné, polyisoprène, polyacrylate, oxyde de propylène, polybutadiène, polysulfure, NBR modifié, silicone et caoutchouc butadiène styrène (SBR).
